# EUROPÄISCHE PATENTSCHRIFT

(11) **EP 2 297 790 B1**
(45) Veröffentlichungstag und Bekanntmachung des Hinweises auf die Patenterteilung: **10.08.2016**
(21) Anmeldenummer: 09761322.8
(22) Anmeldetag: 11.06.2009
(51) Int. Cl.: H01L 31/042, F24J 2/52

(54) **MONTAGESYSTEM FÜR PV-MODULE**
MOUNTING SYSTEM FOR A PV-MODULE
SYSTÈME D'ASSEMBLAGE POUR UN MODULE PHOTOVOLTAÏQUE

(30) Priorität: 11.06.2008 DE 102008027857
(43) Veröffentlichungstag der Anmeldung: 23.03.2011
(73) Patentinhaber: Schletter GmbH, 83527 Kirchdorf (DE)
(72) Erfinder: URBAN, Hans, 83527 Haag (DE); ZAPFE, Cedrik, 85567 Grafing (DE)
(74) Vertreter: Thum, Bernhard
(86) Internationale Anmeldenummer: PCT/DE2009/000811
(87) Internationale Veröffentlichungsnummer: WO 2009/149700

(56) Entgegenhaltungen:
- EP-A2- 1 348 915
- WO-A2-2006/101392
- DE-U1-202008 015 237
- US-A- 5 143 556
- US-A- 5 480 494

## Beschreibung

Die Erfindung betrifft ein Montagesystem mit dem Photovoltaik-Module mittels rückseitig aufgeklebter Halter werkzeugfrei auf einer Tragstruktur befestigbar sind. Derartige Montagesysteme werden insbesondere für große photovoltaische Aufdach- und Freiflächenanlagen mit rahmenlosen Dünnschichtmodulen gefordert.

Aus DE 101 05 718 A1 ist ein Photovoltaik-Modulverbund bekannt, dessen PV-Module an einer Tragstruktur einhängbar sind. Dazu sind auf der Rückseite der PV-Module aus dem Fassadenbau bekannte Agraffen vorgesehen, die mit Bolzen an der Tragstruktur eine Hakenverbindung bilden. Aus US 5,480,494 A sind PV-Module bekannt mit aus Blech geformten Grundkörpern, die mittels verschiedener Hakenverbindungen an Tragstrukturen befestigt werden können.

Aus DE 103 29 184 A1 ist ein System zur Befestigung von Dachbauelementen bekannt. Das System umfasst mehrere Haftverbinder, deren korrespondierende Fügeteile nach dem Klettprinzip wirken sollen. Die Fügeteile können hierbei auf der Rückseite eines PV-Moduls selbstklebend angeordnet sein.

Aus DE 10 2004 055 187 A1 sind Profilleisten für Photovoltaik-Module bekannt, die mittels Silikonklebstoff rückseitig auf ein rahmenloses PV-Modul geklebt und mit einer Tragstruktur verschraubbar sind.

Aus US 5,143,556 A ist eine Aufständerung für ein PV-Modulfeld bekannt, dessen Module unter Verwendung rückseitig aufgeklebter Halter auf Tragschienen montierbar sind. Jeder Halter soll den Wulst am Kopf eines Bolzens clipartig umgreifen, wobei die Bolzen einzeln von den Tragschienen abstehen.

Mit zunehmend größeren Modulformaten werden diese bekannten Montagesysteme den Herstellungs- und Montageanforderungen industrieller Photovoltaik-Anlagen nicht mehr gerecht. Zudem sind manche der bekannten Systeme nicht für starke Wind- und Schneelasten ausgelegt.

Aufgabe der Erfindung ist es daher, ein Montagesystem für PV-Module zu entwickeln, mit dem insbesondere großflächige rahmenlose Dünnschichtmodule unter Berücksichtigung starker Wind- und Schneelasten schonend und sicher gehalten werden. Darüber hinaus soll das Montagesystem werkzeugfrei montierbar und herstellungsgerechter sein.

Die Lösung der Aufgabe erfolgt mit den im Anspruch 1 angegebenen Merkmalen. Demgemäß umfasst das Montagesystem bevorzugt zwei oder auch mehr profilförmige Querschienen, die parallel beabstandet angeordnet und zum Halten mehrerer PV-Module vorgesehen sind. Die vorzugsweise baugleichen Querschienen können insbesondere aus einem Aluminiumwerkstoff und in einem Extrusionsverfahren wie Strangpressen hergestellt sein. Es ist auch denkbar, die Querschienen aus anderen Materialien wie z. B. Holz oder Stahl und mit anderen Verfahren in einer Profilform herzustellen.
Die Querschienen haben hauptsächlich eine Haltefunktion für die Halter und können daher zum Tragen mehrerer PV-Module in Art einer Sandwich-Konstruktion von zusätzlichen Tragelementen unterstützt sein. Bevorzugt ist es jedoch möglich, dass die Querschienen zugleich die Funktion eines Lastträgers für mehrere PV-Module übernehmen. Wesentlich für die Haltefunktion der Querschienen ist, dass diese in einer Unterkonstruktion quer verlaufen. Das bedeutet auf dem Gebiet von Photovoltaik-Anlagen, dass die Querschienen quer zu den abwärts laufenden Kanten und/oder zur Falllinie bzw. Hangabtriebsrichtung der PV-Module ausgerichtet sind. In Schräganordnungen sind die Querschienen daher leicht daran zu erkennen, dass diese in unterschiedlichen Höhen bevorzugt waagrecht angeordnet sind. Jede der Querschienen weist außerdem eine plane Stützfläche auf, die auch aus mehreren Teilflächen bestehen kann. Die Stützflächen der Querschiene können dabei eine gemeinsame schräge Ebene bilden, die vorzugsweise parallel zur Modulebene ist. Die Fügerichtung führt dann bevorzugt parallel zu dieser Ebene nach unten. Es ist jedoch auch denkbar, die Stützflächen untereinander treppenartig vorzusehen. Im Falle einer gemeinsamen schrägen Ebene kann diese insbesondere in einem solarenergetisch günstigen Winkel zwischen 20 und 50 Grad gegenüber einer waagrechten Ebene geneigt sein.

Das Montagesystem umfasst des Weiteren mehrere, vorzugsweise baugleiche Halter, die jeweils unter Verwendung eines Klebemittels mit der Rückseite eines PV-Moduls fest verbunden oder verbindbar sind. Das Klebemittel kann insbesondere ein Klebstoff auf Silikonbasis sein, der sich im Bauwesen auch unter extremen Witterungsverhältnissen für die Materialkombination Metall und Glas als zuverlässig erwiesen hat. Zwei-Komponenten-Silikonklebstoffe werden dabei bevorzugt. Es ist ebenso denkbar, beispielsweise Epoxidharz-, Polyesterharz-, Polyurethan- oder Acrylatklebstoffe zu verwenden. Drüber hinaus kann als Klebemittel auch ein doppelseitig mit Klebstoff überzogener Träger vorgesehen sein. Ein solcher Träger kann insbesondere als doppelseitiges Klebepad ausgeführt sein, das vorzugsweise mit den Abmessungen des Halters korrespondiert. Hierbei kann der Träger bereits vor dem Verbinden des Halters mit der Modulrückseite, das heißt in vorgefertiger Weise auf dem Halter oder alternativ auf dem PV-Modul aufgebracht und zweckmäßigerweise mit einer abziehbaren Schutzfolie versehen sein.

Mittels der Halter kann das PV-Modul an den Querschienen einhängt werden, wozu jeder Querschiene mindestens ein Halter zugeordnet ist und jeder Halter eine Vertiefung und jede Querschiene einen integrierten Vorsprung aufweist. Alternativ ist es auch möglich, dass jeder Halter einen solchen Vorsprung und jede Querschiene eine integrierte Vertiefung aufweist. Zum Einhängen wird das PV-Modul dann erstens auf die Querschienen aufgelegt, so dass die Halter auf den Stützflächen der Querschienen plan aufliegen. Die Halter weisen hierzu vorzugsweise jeweils eine plane Auflagefläche auf, an der diese auf die Stützfläche der jeweiligen Querschiene mit flächigem Kontakt auflegbar und dort entsprechend verschieblich geführt sind. Das PV-Modul wird dann zweitens dort aufliegend in einer Fügerichtung senkrecht zu den Querschienen verschoben wird, wobei die Vertiefungen und die Vorsprünge während des Verschiebens in zunehmenden Maße ineinander eingreifen. Die Fügerichtung ist außerdem parallel zu den Stützflächen und führt vorzugsweise in der Falllinie und/oder parallel zu einer abwärtslaufenden Außenkante des PV-Moduls schräg nach unten.
Die Vertiefung eines Halters kann insbesondere als Hinterschnitt eines Hakens ausgeführt sein. Ein solcher Haken steht bevorzugt von der Auflagefläche des Halters ab. Der als Gegenstück wirkende Vorsprung der jeweiligen Querschiene kann in vorteilhafter Weise als Überstand einer hinterschnittenen Nut ausgeführt sein, welche in das Profil der Querschiene integriert ist und in welche der Haken beim Auflegen eingesetzt wird. Der Öffnungsschlitz einer solchen hinterschnittenen Nut kann die Stützfläche der Querschiene unterteilen, vorzugsweise in zwei annähernd gleich breite Teilflächen.
Alternativ ist es auch möglich, dass die Vertiefung jeweils als Hinterschnitt eines in der Querschiene integrierten Hakens ist und der Vorsprung jeweils als Überstand einer hinterschnittenen Nut im Halter vorgesehen ist. Hierbei kann der Haken von der Stützfläche der Querschiene abstehen und die hinterschnittenen Nut die Auflagefläche des Halters unterteilen.

Das erfindungsgemäße Montagesystem umfasst außerdem eine Haltesicherung. Diese ist zwischen mindestens einer Querschiene und einem ihr zugeordneten Halter vorgesehen und wirkt einer möglichen Rückverschiebung des Halters gegen die Fügerichtung entgegen, insbesondere im Falle von Windsog. Eine solche Haltesicherung kann beispielsweise als Rastverbindung mit mehreren Fügepostionen und/oder als Blockiereinrichtung ausgeführt sein.

Die Erfindung ist mit einer Reihe von Vorteilen verbunden. So ist das erfindungsgemäße Montagesystem besonders herstellungs- und montagegerecht. Die Halter können vorzugsweise werksseitig in einem automatisierten und überwachten Prozess mittels Kleben auf die Rückseite des PV-Moduls befestigt werden. Alternativ ist es aber auch denkbar, die Halter erst bauseitig dort anzubringen. Weist das Klebemittel wie insbesondere ein Silikonklebstoff elastische Eigenschaften auf, können zudem temperatur- und montagebedingte Spannungen aufgenommen werden und das PV-Modul kann gedämpft gelagert sein.
Da in der profilförmigen Querschiene der Vorsprung bzw. die Vertiefung bereits integriert ist, gestaltet sich die Herstellung der Querschienen besonders einfach. So können diese bevorzugt durch Strangpressen oder Walzprofilieren hergestellt werden. Hierbei ist es zudem auf einfache Weise möglich, die Querschienen besonders tragfähig zu gestalten, so dass diese über große Spannweiten mehrere PV-Module tragen können.
Dadurch, dass der Vorsprünge bzw. die Vertiefungen in den Querschienen integriert bzw. durchgehend sind, ist es bei der Montage möglich, das PV-Modul an beliebigen Stellen entlang den Querschienen einzuhängen. Die Montage erfolgt zudem werkzeugfrei und besonders ergonomisch. So unterteilt sich der Fügevorgang in ein freies Auflegen auf die planen Stützflächen der Querschienen und ein anschließendes leichtgängiges Abwärtsschieben. Nach dem Auflegen können die PV-Module gegebenenfalls parallel zu den Querschienen noch in eine andere Montageposition geschoben werden. Insbesondere bei großflächigen und damit entsprechend schweren PV-Modulen ist diese Unterteilung des Fügevorgangs daher von Vorteil.
Auch aus statischer Sicht bieten die planen Stützflächen große Vorteile. So liegt jeder Halter auf der ihm zugeordneten Querschiene vergleichsweise großflächig auf, wodurch ein entsprechend stabiler und leicht berechenbarer Lastabtrag ermöglicht wird. Dies gilt im besonderen Maße für hohe Schnee- und Windlasten. Das Montagesystem eignet sich daher besonders für rahmenlose Dünnschichtmodule mit einer Fläche von deutlich mehr als einem Quadratmeter.

Ein weiterer wesentlicher Vorteil besteht darin, dass herstellungs- und montagebedingte Toleranzen im Abstand der Querschienen und der Halter ausgeglichen werden können. Sind beispielsweise die Querschienen zu weit oder zu eng beabstandet, kann dies durch einen unterschiedlich tiefen Eingriff von Vertiefung und Vorsprung kompensiert werden. Besonders vorteilhaft dabei ist, dass unabhängig von der Tiefe des Eingriffs die Halter stets auf den planen Stützflächen mit flächigem Kontakt aufliegen und dort je nach Abstandssituation verschiebbar sind.
Außerdem schützt die Haltesicherung davor, dass sich insbesondere bei extremen Windverhältnissen die Vertiefung und der Vorsprung entgegen der Fügerichtung wieder aus dem Eingriff lösen können. Diese Haltesicherung kann alternativ oder ergänzend auch als Diebstahlsicherung ausgeführt sein.
Ferner können nicht nur die Querschienen, sondern auch die Halter in einem Strangpressverfahren auf einfache Weise massenhaft hergestellt sein. So ist es bevorzugt, wenn die Halter im Wesentlichen als Strangpressteil ausgeführt bzw. von einem Strangpressprofil entsprechend abgelängt sind. Wie bei den Querschienen kann die Vertiefung bzw. der Vorsprung des jeweiligen Halters daher ebenso mit extrudiert bzw. integriert sein.
Zusammenfassend leistet das erfindungsgemäße Montagesystem, angesichts zunehmend großflächigerer und preiswerterer PV-Module, einen maßgeblichen Beitrag zu herstellungs- und montagegerechteren Tragstrukturen für industrielle Photovoltaik-Anlagen.

In einer bevorzugten Ausführungsform sind die Halter von der Außenkontur des PV-Moduls beabstandet an Stellen im Flächeninneren der Rückseite des PV-Moduls angeordnet. Dabei ist es zweckmäßig, die Halter derart anzuordnen, dass das PV-Modul in Gebrauchslage eine möglichst geringe Durchbiegung erfährt. Auf diese Weise kann das Modul besonders geschont und dessen Trageigenschaften für Schneelasten erhöht werden. Sind für das PV-Modul genau vier Halter vorgesehen, können die Halter bzw. deren Zentren von den Außenkanten des PV-Moduls bevorzugt um 17 % bis 27 % des Abstandes zur jeweils gegenüberliegenden Außenkante nach innen beabstandet sein. Gemäß einer Regel nach Bessel ist dabei ein Abstand zum Zentrum des Halters von rund 22 % besonders vorteilhaft.

Zur Anordnung der Halter auf der Rückseite des PV-Moduls kann eine Montageschablone vorgesehen sein, die in Bezug auf die Außenkontur des PV-Moduls die Stellen zur Anordnung der Halter vorgibt. Mit Hilfe einer solchen Montageschablone können die Halter auch noch am Errichtungsort der Photovoltaik-Anlage auf die PV-Module geklebt werden, bevorzugt unter Verwendung der vorbeschriebenen doppelseitigen Klebepads. Bei Verwendung doppelseitiger Klebeträger ist es ferner denkbar, diese bereits werksseitig exakt an den gewünschten Stellen auf die Rückfläche der PV-Module zu kleben. Auf diese Weise können die Halter am Errichtungsort nach Abziehen einer entsprechenden Schutzfolie auf den Klebeträgern positioniert werden, wodurch die Verwendung einer Montagschablone verzichtbar sein kann. Die Klebeträger markieren dabei die Stellen für die Anordnung. Für eine montagegerechte und exakte Positionierung ist es dabei von Vorteil, wenn der Klebeträger jeweils mit der Außenkontur der dafür vorgesehenen Klebefläche am Halter korrespondiert.

In einer weiteren bevorzugten Ausführungsform weisen die Halter jeweils einen flachen Tragkörper auf mit einer Auflagefläche und einer dazu parallelen Klebefläche. Die Auflagefläche und die Klebefläche sind vorzugsweise plan. Der Tragkörper bzw. dessen Klebefläche kann zudem ein rechteckiges Format aufweisen, wobei dessen längere Seite vorzugsweise parallel zu einer Langseite eines gegebenenfalls rechteckigen PV-Moduls gerichtet ist. Selbstverständlich ist es auch möglich, den Tragkörper in anderen Formen vorzusehen, insbesondere auch mit quadratischen oder kreisrunden Klebeflächen. In jedem Fall sind die mit dem Klebemittel zu versehenden Klebeflächen der Halter bzw. Tragkörper ausreichend groß, um das PV-Modul sicher zu halten und schonend zu tragen. In einer besonders vorteilhaften Weiterentwicklung verjüngen sich die flachen Tragkörper zu den Außenkanten ihrer der Klebeflächen. Das bedeutet, dass die Materialstärke rückseitig der Klebefläche vom Zentrum oder von einem zentralen Bereich des Halters bzw. Tragkörpers nach außen hin abnimmt bzw. dünner wird, vorzugsweise kontinuierlich. Aufgrund dieser Verjüngung nimmt auch die Steifigkeit des Halters bzw. Tragkörpers nach außen hin ab, was einen abrupten Steifigkeitswechsel zwischen unterstütztem und nicht unterstütztem Bereich des PV-Moduls verhindert. Steifigkeitssprünge und dadurch , bedingte lokale Spannungskonzentrationen können so wirksam vermieden werden, was das PV-Modul insbesondere hinsichtlich starker Schneelasten und dynamischer Windlasten schont. Außerdem können auf diese Weise auf die Klebung wirkende Schub- und Scherkräfte verringert werden. Ein derartiger ausgebildeter Tragkörper kann insbesondere einen trapezähnlichen und damit extrudierbaren Querschnitt aufweisen oder ähnlich einem Pyramidenstumpf mit vier oder mehr Kanten oder ähnlich einem Kegelstumpf geformt sein. Auch sind andere Formen für den Tragkörper denkbar, bei denen eine Abnahme der Materialstärke nach außen nicht linear, sondern beispielsweise parabel- oder hyperbelförmig erfolgt. Dies kann insbesondere bei rotationssymmetrischen Formen von Vorteil sein.

In einer bevorzugten Ausführungsform greifen die Vertiefungen und die Vorsprünge beim Verschieben in der Fügerichtung formschlüssig passend ineinander ein. Dabei ist vorzugsweise ein Schiebespiel vorgesehen ist, so dass die Vertiefungen und die Vorsprünge mit einem Schiebesitz ineinander eingreifen. Die Vorsprünge und die Vertiefungen sind dazu bevorzugt starr ausgeführt. Auf diese Weise wird eine besonders stabile und leicht berechenbare Verbindung zwischen den Haltern und den Querschienen erzeugt, die mit einer Nut-Feder-Verbindung mit Schiebesitz vergleichbar ist. Dadurch ist ein Abheben der Halter von den Stützflächen selbst bei extremen Windsogen nicht möglich.
Außerdem ist es möglich, dass die Vertiefung und/oder die Vorsprünge zugleich von der Stützfläche der Querschiene bzw. der Auflagefläche des Halters begrenzt sind. Des Weiteren kann es von Vorteil sein, wenn zwischen der Auflagefläche sowie einer dazu parallel gegenüberliegenden Flanke am Vorsprung oder der Vertiefung des Halters einerseits und der Stützfläche sowie einer dazu parallel gegenüberliegenden Flanke am Vorsprung oder der Vertiefung der Querschiene andererseits ein Schiebsitz vorgesehen ist. Die Flanken können hierbei der Stützfläche bzw. der Auflagefläche direkt oder auch schräg gegenüberliegen. Wesentlich ist, das die jeweilige Flanke der Auflage- bzw. Stützfläche für den Schiebesitz passend entgegenwirkt.
Alternativ oder ergänzend ist es möglich, dass die Vertiefungen und die Vorsprünge kraft- und formschlüssig ineinander eingreifen. Dazu kann mindestens eine Flanke der Vertiefungen und/oder mindestens eine Flanke der Vorsprünge elastisch ausgeführt sein, zum Beispiel als integrierter Biegebalken, oder an elastische Elemente angrenzen, insbesondere an eine metallische Feder. Eine solche Feder kann zwischen der Flanke eines Vorsprungs und der Flanke einer Vertiefung angeordnet sein. Es ist auch denkbar, den Vorsprung als Ganzes in Form eines Biegebalkens auszuführen. In jedem Fall ist es zum Ausgleich von Abstandstoleranzen von Vorteil, wenn der maximal mögliche Eingriff zwischen den Vertiefungen und den Vorsprüngen entsprechend bemessen ist, insbesondere mindestens 4 mm beträgt. Während des Eingriffs besteht vorzugsweise stets ein Schiebesitz.

In einer weiteren bevorzugten Ausführungsform ist zur arretierenden Haltesicherung zwischen mindestens einer Querschiene und einem ihr zugeordneten Halter eine Rastverbindung mit mehreren nacheinanderfolgenden Fügepositionen vorgesehen. Die Fügepositionen folgen hierbei während des Verschiebens in der vorgenannten Fügerichtung nacheinander, vorzugsweise gleichbeabstandet. Auf diese Weise die Querschienen und die Halter können trotz herstellungs- oder montagebedingter Abstandsabweichung spielfrei miteinander verbunden werden. Dabei ist es möglich, die Rastverbindung so zu gestallten, dass diese gegen die Fügerichtung sperrend wirkt, wodurch eine Demontage nicht mehr ohne Weiteres möglich ist.
Die Rastverbindung kann insbesondere eine in die Querschiene integrierte Zahnreihe und einen an dem entsprechenden Halter elastisch angeordneten Schnapphaken umfassen, der mit der Zahnreihe zusammenwirkt. Es alternativ denkbar, die Rastverbindung so vorzusehen, dass in der Querschiene eine Erhebung integriert ist, beispielsweise in Form einer Hakennase, und am Halter eine elastisch angeordnete Zahnreihe vorgesehen ist, die mit der Erhebung zusammenwirkt. Hierbei ist es auch möglich, mehrere aufeinanderfolgende Erhebungen vorzusehen, vorzugsweise in Form einer zweiten starren Zahnreihe, die mit der elastischen Zahnreihe zusammenwirkt.
In einer besonderen Weiterentwicklung ist es zudem möglich, die Elemente der Rastverbindung, wie insbesondere einen Schnapphaken und eine Zahnreihe, an den Flanken der Vorsprünge und/oder der Vertiefungen anzuordnen. Außerdem ist es möglich, die Elemente der Rastverbindung so anzuordnen, dass diese die jeweiligen Vorsprünge und/ oder Vertiefungen begrenzen. Hierbei kann es von besonderem Vorteil sein, wenn eines der elastischen Elemente der Rastverbindung den Halter gegen die Stützfläche der Querschiene drückt.

In einer weiteren bevorzugte Ausführungsform ist zur sperrenden Haltesicherung an mindestens einem der Halter ein Sperrelement vorgesehen, das in einer Freigabestellung ein Verschieben des Halters auf der Stützfläche der ihm zugeordneten Querschiene in der Fügerichtung zulässt und in einer Blockierstellung ein Verschieben entgegen der Fügerichtung sperrt. Insbesondere kann das Sperrelement ein am Halter angeordneter Schnappriegel sein, der mit einem Anschlag an der Querschiene zusammenwirkt. Dabei kann es von Vorteil sein, wenn der Schnappriegel in der Freigabestellung in einer in der Auflagefläche des Halters vorgesehen Ausnehmung eingelenkt ist und während des Verschiebens in der Fügerichtung auslenkt und in der Blockierstellung an dem Anschlag der Querschiene anstehen kann.

In einer besonders bevorzugten Ausführungsform des Montagesystems sind je PV-Modul vier punktartig wirkende Halter und genau zwei Querschienen vorgesehen, wobei jeweils zwei Halter eine der beiden Querschienen zugeordnet sind. Alternativ ist es auch denkbar, zwei Querschienen jeweils nur einen linienartig wirkenden Halter zuzuordnen, so dass das PV-Modul mittels nur zwei Haltern getragen wird. Ferner ist es je nach Größe des Moduls möglich, mehr als zwei Querschienen und auch mehr als zwei Halter je Querschiene und PV-Modul vorzusehen. So kann es insbesondere für großflächige PV-Module von Vorteil sein, zwei oder drei Querschienen und je drei Halter vorzusehen. Für Modulformate mit einer Fläche von mehreren Quadratmetern sind entsprechend mehr Halter und Querschienen möglich.

Nachfolgend werden mehrere Ausführungsbeispiele der Erfindung anhand von Zeichnungen näher erläutert. Es zeigen:
**Fig. 1** eine Seitenansicht eines aufgeständerten PV-Modulfelds,
**Fig. 2** eine Ansicht senkrecht auf die Ebene des PV-Modulfelds gemäß **Fig. 1****,**
**Fig. 3** eine Draufsicht auf eine Montageschablone,
**Fig. 4** ein Montagesystem gemäß **Fig. 1** vor dem Fügen,
**Fig. 5** ein Detail des Montagesystems gemäß **Fig. 4****,**
**Fig. 6** bis **Fig. 9** den Fügevorgang des Montagesystems gemäß **Fig. 4****.**
**Fig. 10** eine Perspektivansicht auf das Montagesystem gemäß **Fig. 1****,**
**Fig. 11** eine Variante des Montagesystems gemäß **Fig. 1** **in** einer Detailansicht,
**Fig. 12** eine Variante des Montagesystems gemäß **Fig. 1** in einer Detailansicht,
**Fig. 13** eine Variante des Montagesystems gemäß **Fig. 1** in einer Detailansicht,
**Fig. 14** und **Fig. 15** eine Variante des Montagesystems gemäß **Fig. 1****.**

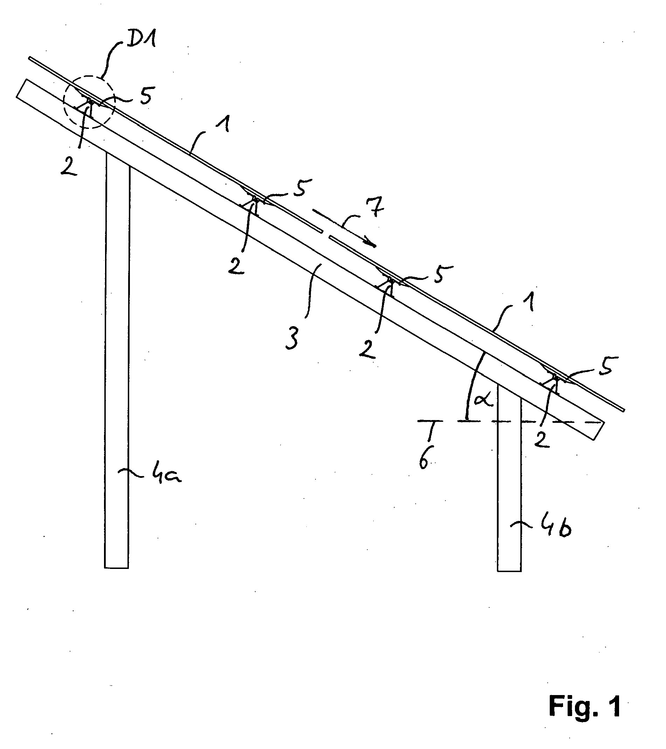

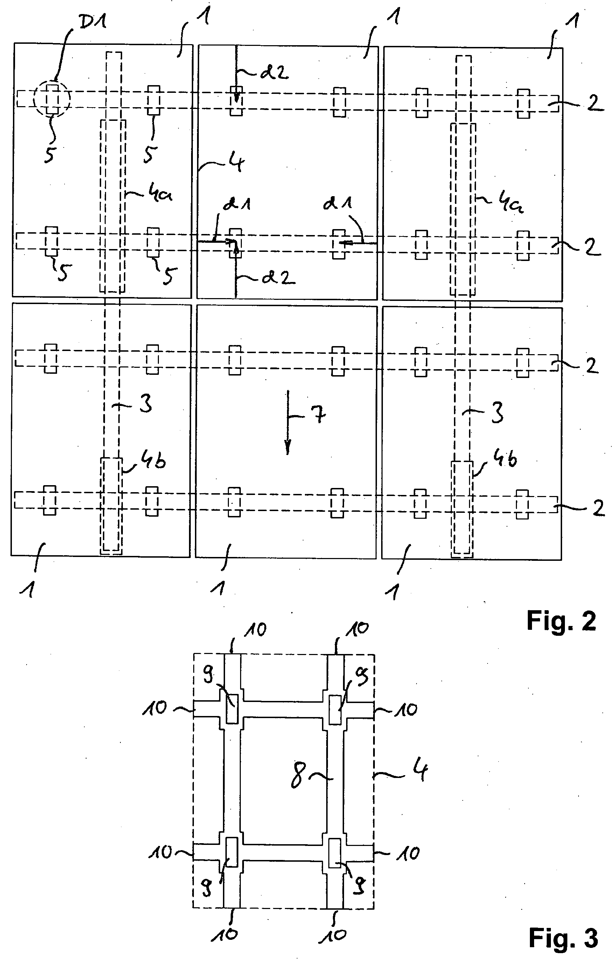

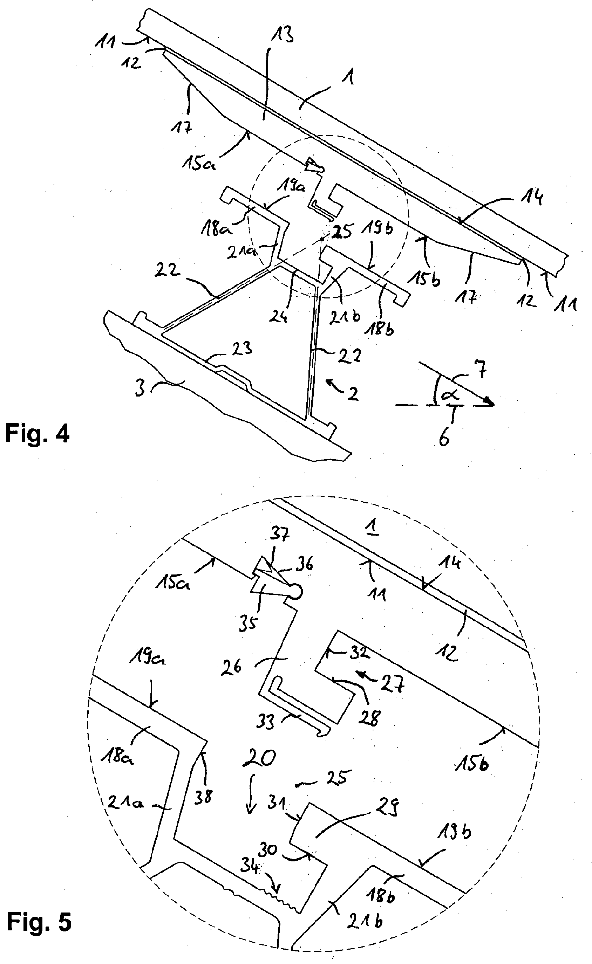

**Fig. 1** und **Fig. 2** zeigen zunächst schematisch, wie das erfindungsgemäße Montagesystem in einem aufgeständerten PV-Modulfeld eingebunden ist. Das PV-Modulfeld besteht aus sechs baugleichen, als rahmenlose Dünnschichtmodule ausgeführte PV-Modulen **1** mit rechteckigem Format. Die PV-Module **1** sind auf einer Tragstruktur schräg aufgeständert. Die Tragstruktur umfasst zwei hohe Stützen **4 a** und zwei niedrige Stützen **4 b** sowie zwei Schrägbalken **3,** die jeweils schräg über den Stützen **4 a** und **4 b** angeordnet sind. Die zwei Schrägbalken **3** bilden hierbei eine schräge Montageebene, die in einem Winkel α von rund 30° gegenüber einer waagrechten Ebene **6** geneigt ist. Die Montageebene ist zudem parallel zur Modulebene, so dass beide entsprechend dem Winkel α eine durch den Pfeil **7** repräsentierte Hangabtriebsrichtung bzw. Falllinie aufweisen.
Zur Tragstruktur gehören außerdem vier baugleiche Querschienen **2.** Diese sind auf den zwei Schrägbalken **3** angeordnet und verlaufen quer zu diesen. Die vier Querschienen **2** sind parallel beabstandet, wobei jeweils zwei benachbarte Querschienen **2** drei der PV-Module **1** in einer Reihe halten und tragen. Dementsprechend sind zwei Modulreihen zu je drei PV-Modulen **1** vorgesehen. Die Querschienen **2** sind außerdem profilförmig, d. h. diese weisen über deren Länge einen einheitlichen Querschnitt auf, welcher in **Fig. 4** näher ersichtlich ist. Das erfindungsgemäße Montagesystem umfasst diese Querschienen **2.**

Es ist ebenso möglich, die Querschienen **2** auf einem Schrägdach zu installieren. Wesentlich für die noch zu erläuternde Funktion des Montagesystems ist, dass die Querschienen **2** wie dargestellt zu den Schrägbalken **3** quer verlaufen. Auf einem Schrägdach würden die Querschienen entsprechend quer zur Falllinie des Schrägdaches ausgerichtet sein. Querschienen können in einer Schräganordnung auch daran erkannt werden, dass diese in unterschiedlichen Höhen waagrecht oder ungefähr waagrecht verlaufen. Bei stark in Ost-West-Richtung geneigtem Gelände können die Querschienen auch deutlich aus der Waagrechten abweichen. In jedem Fall ist der Pfeil **7** vorzugsweise zu den abwärtsverlaufenden Kanten der PV-Module **1** gleichgerichtet, unabhängig von der Falllinie.

**Fig. 1** und **Fig. 2** zeigen weiter, dass jedes PV-Modul **1** über vier Halter **5** mit zwei der Querschienen **2** verbunden ist, wobei jeder dieser zwei Querschienen **2** zwei dieser Halter **5** zugeordnet sind. Wie anhand **Fig. 4** näher erläutert wird, sind die Halter **5** mit der Rückseite **11** des jeweiligen PV-Moduls **1** unter Verwendung eines Klebstoffs fest verbunden. Wesentlich ist außerdem, dass die Halter **5** von der Außenkontur **4** beabstandet an Stellen im Flächeninneren der Rückseite des jeweiligen PV-Moduls **1** angeordnet sind. Nach der Theorie von Bessel sind die Stellen dabei von der Außenkontur **4** des PV-Moduls **1** nach innen um den Faktor 0,22 mal der Seitenlänge zur jeweils gegenüberliegendenden Modulkante beabstandet, was mit den Abstandpfeilen **d1** und **d2** veranschaulicht ist. Dadurch erfährt das über die Halter **5** getragene PV-Modul **1** eine möglichst geringe Durchbiegung bzw. Biegebeanspruchung. Die Halter **5** werden vorzugsweise in einem industriellen Fertigungsverfahren bereits werkseitig auf die Rückseite der PV-Module **1** aufgeklebt. Alternativ ist denkbar, die Halter **5** behelfsmäßig unter Verwendung einer Montageschablone **8** gemäß **Fig. 3** mit einem PV-Modul **1** zu verbinden. Die Montageschablone **8** kann aus einem flachen Blech bestehen und ist gitterförmig ausgebildet und weist außen Anschläge **10** auf, mit denen die Montageschablone **8** stets deckungsgleich auf ein PV-Modul **1** aufgesetzt bzw. an dessen gestrichelt dargestellter Außenkontur **4** angelegt werden kann. Die Montageschablone **8** weist zudem vier Ausnehmungen **9** auf, welche mit Format der Halter **5** korrespondieren und an den für die Halter **5** vorgesehenen Stellen angeordnet sind. Mittels Einsetzen in die Ausnehmungen **9** können die Halter **5** auf einfache Weise auf einer Baustelle präzise positioniert und vorzugsweise unter Verwendung von doppelseitigen Klebepads auf der Rückseite des PV-Moduls **1** befestigt werden. Es ist auch denkbar, dass die Montageschablone **8** zugleich die Stärke der Klebestoffschicht **12** gemäß **Fig. 4** vorgibt.

**Fig. 4** zeigt das erfindungsgemäße Montagesystem mit der Querschiene **2** und dem Halter **5** zusammen mit dem PV-Modul **1** an der Stelle **D1** gemäß **Fig. 1** und **Fig. 2** vor dem Fügen. Zu erkennen ist, dass der Halter **5** einen flachen, plattenartigen Tragkörper **13** aufweist, der oben von einer planen Klebefläche **14** und unten von einer planen Auflagefläche **15 a, b** begrenzt ist. Die Klebefläche **14** und die Auflagefläche **15 a, b** sind zueinander parallel und flach beabstandet. Die Klebefläche **14** hat, wie aus **Fig. 2** erkennbar ist, ein rechteckiges Format und weist im Ausführungsbeispiel eine Fläche von rund 60 mal 150 mm auf. Flach bedeutet in diesem Zusammenhang insbesondere, dass die Materialdicke des Tragkörpers **13** von hier rund 8 mm signifikant, vorzugsweise wie bei Platten um ein Vielfaches, geringer ist als die Länge der Rechteckseiten der Klebefläche **14.** Außerdem sind aus statischen Gründen die Langseiten der Klebefläche **14** parallel zu den Langseiten des rechteckigen PV-Moduls **1** ausgerichtet.
Der Halter **5** ist an seiner Klebefläche **14** unter Verwendung eines Klebemittels mit der planen Rückseite **11** des PV-Moduls **1** fest verbunden. Das Klebemittel ist schematisch als flache Klebstoffschicht **12** zwischen der Rückseite **11** des PV-Moduls **1** und der Klebefläche **14** erkennbar. Da der Halter **5** insbesondere aus einem Metallwerkstoff, vorzugsweise aus einem Aluminium, und die Rückseite **11** des als rahmenloses Dünnschichtmodul ausgeführten PV-Moduls **1** üblicherweise aus Glas bestehen kann, bietet sich zur Klebung ein für diese Materialkombination im Bauwesen und im Außenbereich erprobter ZweiKomponenten-Silikonklebstoff an. Ein derartiger Klebstoff kann zudem dämpfend und spannungsausgleichend wirken.
Weiter ist ersichtlich, dass der Tragkörper **13** einen trapezähnlichen Querschnitt aufweist, wobei die Auflagefläche **15** kleiner ist als die Klebefläche **14** und etwa mittig unter dieser angeordnet ist. Die Materialstärke des Tragkörpers **13** nimmt daher ausgehend vom linken und rechten Rand der Auflagefläche **15 a, b** zum linken und rechten Rand der Klebefläche **14** mittels zweier Schrägen **17** kontinuierlich ab. Durch diese Verjüngung nimmt auch die Steifigkeit des Halters **5** nach außen hin ab, wodurch ein abrupten Steifigkeitswechsel zwischen unterstütztem und nicht unterstütztem Bereich des PV-Moduls **1** vermieden wird. Steifigkeitssprünge und dadurch bedingte lokale Spannungskonzentrationen können so wirksam verhindert werden, was das PV-Modul **1** insbesondere hinsichtlich großer Wind- und Schneelasten schont.

Aus **Fig. 4** ist außerdem die dem Halter **5** zugeordnete Querschiene **2** zu erkennen. Die Querschiene **2** weist einen besonderen, über deren gesamte Länge einheitlichen Querschnitt auf. Dieser kann in zwei Bereiche unterteilt werden. Einen unteren Bereich, der zum Lastabtrag eine hohe Tragfestigkeit bietet, und einen oberen Bereich, der über besondere Haltemerkmale zum Einhängen der Halter 5 verfügt.
Im oberen Bereich der Querschiene kragen links und rechts zwei Stege **18 a, b** aus, die nach oben je ein Teilfläche einer gemeinsamen planen Stützfläche **19 a, b** bieten. Die Stützfläche **19 a,** b ist durch den Öffnungsschlitz einer hinterschnittenen Längsnut **20** etwa mittig unterbrochen. Die Seitenwände **21 a** und **21 b** dieser hinterschnittenen Längsnut **20** verbinden die auskragenden Stege **18 a**, **b** mit dem unteren Bereich der Querschiene **2.** Dort weist die Querschiene **2** einen trapezartigen Hohlquerschnitt auf, mit links und rechts jeweils einem schrägen Steg **22** sowie einem Untergurt **23** und einem Obergurt **24.** Der Untergurt **23** und der Obergurt **24** sind zueinander parallel, wobei der Untergurt **23** der breitere von den beiden ist. Mit dem Untergurt **23** liegt die Querschiene **2** auf dem Schrägbalken **3** gemäß **Fig. 1** und **Fig. 2** quer auf. Außerdem dient der Untergurt **23** zum Befestigen der Querschiene **2** am Schrägbalken **3,** wozu an dem Untergurt **23** beidseitig Fortsätze angeformt sind, die mit nicht näher dargestellten Klemmen greifbar sind. Der Obergurt **24** ist zugleich der Boden der hinterschnittenen Längsnut **20.** Die beiden schrägen Stege **22** sind in einem Winkel von **60** Grad nach innen geneigt und schneiden sich in ihrer gestrichelt dargestellten Verlängerung in einer als Punkt zu erkennenden Schnittlinie **25.** Diese Schnittlinie **25** verläuft nahezu mittig zwischen den beiden Teilen der Stützfläche **19 a, b.** In einer Gesamtform bilden die Seitenwände **21 a** und **21 b** der hinterschnittenen Längsnut **20** zusammen mit den beiden schrägen Stegen **22** einen etwa X-förmigen Querschnitt. Obwohl die Querschiene **2** statisch optimierte Trageigenschaften besitzt, ist es durchaus vorstellbar, die Querschiene **2** auf den zum Einhängen der Halter **5** vorgesehenen oberen Bereich zu reduzieren und auf einen anderen geeigneten Tragkörper aufzusetzen, wie insbesondere einen Gitterträger oder einen Holzbalken.
Aus **Fig. 4** ist überdies ersichtlich, dass nicht nur die Querschiene **2,** sondern der Halter **5** eine extrudierbare Form aufweist und damit insbesondere in einem Strangpressverfahren herstellbar ist. Im Wesentlichen als Strangpressteile ausgeführt, können die Halter **5** auf einfache Weise durch Ablängen von nur einem Profilstrang in unterschiedlichen Breiten hergestellt und so gegebenenfalls, an unterschiedliche Formate und Trageigenschaften von PV-Modulen angepasst werden. Ferner ist an dieser Stelle gut zu erkennen, dass bei aufgelegtem Halter 5 die Oberseite des Schrägbalken **3** und die Stützflächen **19 a, b,** die Auflagefläche **15 a, b,** die Klebefläche **14** und die Rückseite **11** des PV-Moduls **1** parallel zueinander sind.

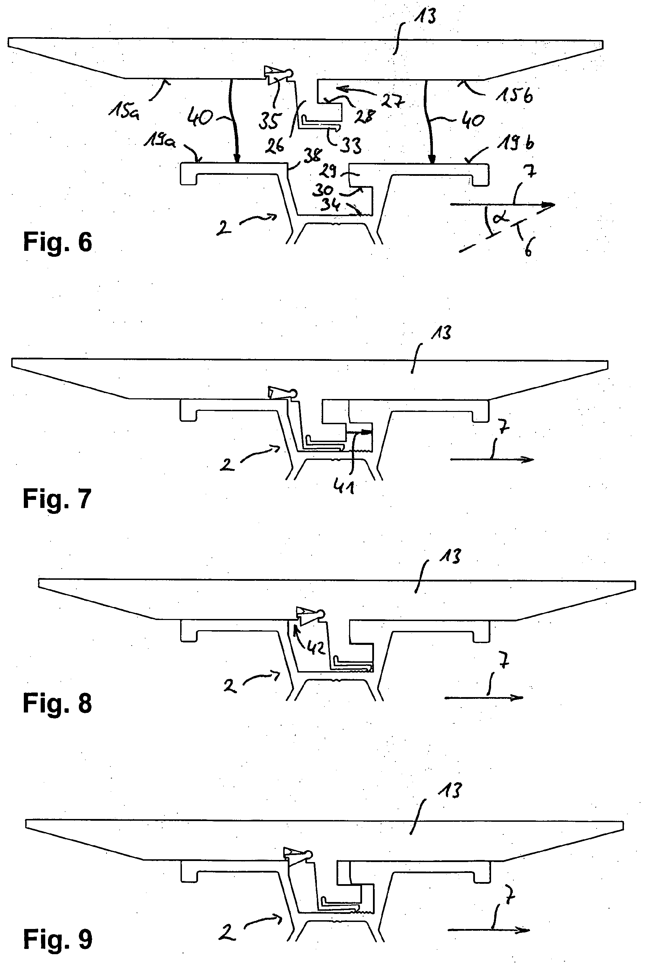

Wie besonders aus **Fig. 5** im Detail erkennbar ist, steht von der Auflagefläche **15 a, b** etwa mittig ein starrer Haken **26** ab. Der Haken **26** ist als L-förmige Leiste ausgebildet, die sich im Querschnitt nicht näher ersichtlich über die gesamte Breite des Halters **5** erstreckt. Der Haken **26** weist zwischen seinem Hakenvorsprung und der Auflagefläche **15 b** einen Hinterschnitt bzw. eine Vertiefung **27** in Form einer Nut auf. Die Vertiefung **27** hat einen rechteckigen Querschnitt und wird oben von der Auflagefläche **15 a, b** sowie unten mit einer dazu parallelen Flanke **28** begrenzt. Das Gegenstück zu der Vertiefung **27** ist an der Querschiene **2** der als Überstand der hinterschnittenen Längsnut **20** ausgebildete Vorsprung **29.** Der Vorsprung **29** hat einen ebenfalls rechteckigen Querschnitt und wird oben von der Stützfläche **19 b** sowie unten von einer dazu parallelen Flanke **30** begrenzt. Die rechteckigen Querschnitte der Vertiefung **27** und des Vorsprungs **29** korrespondieren miteinander. Und wie nachfolgend **in** den **Fig. 8** und **Fig. 9** erkennbar ist, können die Vertiefung **27** und der Vorsprung **29** formschlüssig ineinander geschoben werden, wobei der Fügeweg in Richtung des Pfeils **7** schräg nach unten erfolgt. Vorzugsweise wirkt die Stirnseite **31** des Vorsprungs **29** hier für die Rückseite **32** der Vertiefung **27** als Endanschlag.
In **Fig. 5** ist des Weiteren im Detail erkennbar, dass an dem starren Haken **26** zusätzlich ein Schnapphaken **33** in Form eines Biegebalkens mit einer abstehenden Hakennase vorgesehen ist. Der Schnapphaken **33** ist im Bereiche des Kopf des starren Hakens **26** angeformt und erstreckt sich im Querschnitt nicht näher ersichtlich ebenfalls über die gesamte Breite des Halters **5.** Das Gegenstück zu dem Schnapphaken **33** ist eine im Boden der hinterschnittenen Längsnut **20** integrierte Zahnreihe **34.** Die einzelnen Zähne bzw. Erhebungen der Zahnreihe **34** verlaufen parallel zur Querschiene **2.** Die Fügerichtung dieser Rastverbindung entspricht dabei der Fügerichtung der vorgenannten Vertiefung **27** und des Vorsprungs **29** gemäß Pfeil **7.**

In **Fig. 5** ist außerdem ein als Schnappriegel **35** ausgeführtes Sperrelement ersichtlich. Der Schnappriegel **35** ist in einer Ausnehmung in der Auflagefläche **15 a** schwenkgelagert ein- und auslenkbar. Mittels eines Federelements **37** ist der Schnappriegel **35** in einer stabilen Blockierstellung gegen einen kleinen Anschlag am Rand der Ausnehmung **36** vorgespannt. In der Freigabestellung gemäß **Fig. 7** ist der Schnappriegel **35** in die Ausnehmung **36** vollständig eingelenkt, so dass dieser nicht aus der Auflagefläche **15 a** herausragt. Der Schnappriegel wirkt in seiner Blockierstellung mit einem am linken Rand der hinterschnittenen Längsnut **20** vorgesehenen Anschlag **38** zusammen, wie aus **Fig. 9** ersichtlich ist. An dieser Stelle sei zudem erwähnt, dass der Halter **5** mit Ausnahme des Schnappriegels **35** und des Federelements **37** als Strangpressteil ausgeführt ist, wobei der Haken **26** mit der Vertiefung **27,** der Schnapphaken **33** und die Ausnehmung für den Schnappriegel **35** bereits mittels Extrudieren integriert sind.

**Fig. 6** bis **9** zeigen den Fügevorgang des Montagesystems bzw. wie der Halter **5** in den oberen Bereich der Querschiene **2** eingehängt wird. Das PV-Modul **1** und die Klebstoffschicht **12** sind hierbei nicht dargestellt. Außerdem gelten die Bezugszeichen gemäß **Fig. 1** bis **Fig. 5** ergänzend. Zur besseren Vergleichbarkeit der einzelnen Fügestellungen ist das Montagesystem in den Zeichnungen zudem waagrecht dargestellt, wobei zu beachten ist, dass die Stellung gemäß **Fig. 6** derjenigen gemäß **Fig. 5** entspricht. Zur Klarheit ist der die Falllinie repräsentierende Pfeil **7,** der Neigungswinkel α von 30 Grad und eine weitere waagrechte Ebene **6** dargestellt.

**Fig. 6** stellt eine anfängliche Stellung vor der Fügung dar, bei der beispielsweise zwei Monteure das PV-Modul **1** beabstandet über der Querschiene **2** von Hand halten. Zu erkennen ist, dass der Schnappriegel **35** aus der Ausnehmung **36** ausgelenkt und der Schnapphaken **33** entspannt ist. Nach Ausführen einer ersten freihändigen Bewegung **40** zum Auflegen wird die Stellung gemäß **Fig. 7** erreicht.

Gemäß **Fig. 7** liegt der Halter **5** mit seiner Auflagefläche **15 a, b** nun auf der Stützfläche **19 a, b** der Querschiene **2** mit genügend flächigem Kontakt und damit statisch günstig auf. Beim Auflegen wird der Haken **5** in die hinterschnittene Längsnut **20** der Querschiene **2** eingesetzt. Um dabei Abstandstoleranzen zur parallel benachbarten Querschiene **2** gemäß **Fig. 1** zuzulassen, ist die hinterschnittene Längsnut **20** entsprechend breiter ausgeführt als der Haken **5.** Außerdem ist zu erkennen, dass der Schnappriegel **35** beim Auflegen auf die Stützfläche **19 a** unter Spannung der nicht mehr näher erkennbaren Feder **37** in die Freigabestellung eingelenkt wurde. In dieser Stellung ist ein freies Verschieben des Halters **5** auf der Stützfläche **19 a, b** sowohl in als auch gegen die Falllinie **7** um einen kleinen Betrag zum Ausgleich von Abstandstoleranzen möglich, ohne dass dabei die Vertiefung **27** und der Vorsprung **29** ineinander eingreifen. Ferner setzt der Federhaken **32** am Boden der hinterschnittenen Längsnut **20** auf, so dass dieser um ein geringes Maß vorgespannt wird. In dieser Position ist es zudem besonders einfach, das PV-Modul **1** auf den Stützflächen **19 a, b** parallel zu den Querschienen **2** gegebenenfalls in eine korrekt Montageposition zu schieben, beispielsweise um einen vorgegebenen Abstand zu einem benachbarten PV-Modul zu erreichen.

Eine zweite Fügebewegung **41** schließt die Fügung ab und erfolgt durch eine Verschiebung des Halters **5** senkrecht zur Querschiene **2** und parallel zur Stützfläche **19 a, b** in Richtung des Pfeils **7** nach unten. Dabei schiebt sich die Vertiefung **27** des Hakens **5** formschlüssig passend auf den Vorsprung **29** der Querschiene **2,** wobei zwischen der Flanke **28** der Vertiefung **27** und der Flanke **30** des Vorsprungs **29** ein geeignetes Schiebespiel vorgesehen ist. Wichtig ist, dass die Vertiefung **27** und der Vorsprung **29** über eine einfache Hakenverbindung hinausgehend in Art einer Nut-Feder-Verbindung mit Schiebesitz ineinander eingreifen. Dieser Schiebesitz ist hierbei zwischen dem Halter **5** an seiner Auflagefläche **15 a, b** sowie der dazu parallel gegenüberliegenden Flanke **28** und der Querschiene **2** an ihrer Stützfläche **19 a, b** sowie und der dazu parallel gegenüberliegenden Flanke **30** im gesamten Ausgleichsbereich gegeben. Demnach sind der Halter **5** und die Querschiene **2** zwischen den Maximalpositionen gemäß **Fig. 8** und **Fig. 9** an diesen Flächen gegenseitig geführt. Der Vorsprung **29** ist zugleich von der Stützfläche **19 a** und die Vertiefung zugleich von der Auflagefläche **15 a** begrenzt ist. Während des Ineinanderschiebens der **27** Vertiefung und des Vorsprungs **29** erfolgt eine Überlappung mit Schiebesitz, die ein Abheben des Halters **5** von der Querschiene **2** verhindert. Die Überlappung ist so bemessen, dass Abstandstoleranzen von beispielsweise ±2 mm zwischen den beiden Querschienen **2** und/oder den entsprechenden Haltern **5** gemäß **Fig. 1** und **Fig. 2** ausgeglichen werden können.

Während der zweiten Fügebewegung **41** greift zudem der Schnapphaken **33** in die Zahnreihe **34** ein. Die Länge der Zahnreihe **34** ist hierbei auf die Größe des gewünschten Toleranzausgleichs abgestimmt. Je nach Länge der Verschiebung bzw. je nach Abweichung vom Sollabstand zwischen zweier benachbarter Querschienen **2** und/oder der Halter **5** kann der Schnapphaken **33** dabei eine von mehreren aufeinanderfolgenden Fügepositionen einnehmen, wobei für die Zahnreihe **34** hier ein Rastermaß von weniger als einem Millimeter vorgesehen ist. Entsprechend bietet diese Rastverbindung aus Schnapphaken **33** und Zahnreihe **34** eine fein unterteilte Arretierung, die ein unbeabsichtigtes Verschieben bzw. ein Bewegungsspiel sowohl in als auch gegen den Pfeil **7** wirksam unterbindet. Die Rastverbindung erlaubt jedoch eine Demontage, so dass bei genügend hoher Handkraft die Rastverbindungen aller vier Halter **5** überwunden werden können. Es ist auch denkbar, durch geeignete asymmetrische Gestaltung der Zahnflanken, insbesondere mittels einem Sägezahnprofil, eine Bewegung entgegen der zweiten Fügebewegung **41** bzw. des Pfeils **7** zu sperren. Während der zweiten Fügebewegung **41** lenkt außerdem der Schnappriegel **35** aus der Ausnehmung **36** aus, vorzugsweise in der Stellung, in welcher der Schnapphaken **33** die erste Fügeposition auf der Zahnreihe **34** erreicht. Der Halter **5** kann nach der zweiten Fügebewegung **41** soweit verschoben werden, bis entweder der Boden **32** der Vertiefung an der Stirnseite **31** des Vorsprungs **29** gemäß **Fig. 8** anstößt oder dies bei einem gegenüberliegenden Halter **5** der parallel benachbarten Querschiene **2** erfolgt. Alternativ oder ergänzend kann auch die Stirnseite des Hakenvorsprungs an der gegenüberliegenden Seitenwand **21 b** der hinterschnittenen Längsnut **20** anstoßen.

**Fix. 8** zeigt das Montagesystem in einer ersten von zwei Maximalpositionen. Ein Weiterverschieben in Richtung des Pfeils **7** schräg nach unten ist nicht mehr möglich. Außerdem ist zu erkennen, dass der Schnapphaken **33** in der letzten Füge- bzw. Rastposition der Zahnreihe **34** sitzt. Diese Position kann erreicht werden, wenn die zwei benachbarten Querschienen **2** im Sollmaß beabstandet sind. Es ist auch denkbar, dass diese Position erst lange nach einer Montage erreicht wird, insbesondere wenn aufgrund einer Schneelast das Modul mit großer Kraft nach unten drängt. In dieser Stellung befindet sich im Übrigen der Fuß des Hakens **26** in statisch günstiger Weise etwa mittig in der Schnittlinie **25** der Querschiene **2** gemäß **Fig. 4****.** Außerdem ist zu erkennen, dass der Schnappriegel **35** nun ausgelenkt ist. Sollte die Rastverbindung beispielsweise aufgrund eines Diebstahlversuchs oder bei besonders großem Windsog nach oben hin überdrückt werden, stößt der Schnappriegel **35** gemäß **Fig. 9** am Anschlag **38** am linken Rand der hinterschnittenen Längsnut **20** der Querschiene **2** an. Der in **Fig. 8** zu erkennende Abstand **42** zwischen dem Schnappriegel **35** und dem Anschlag **38** ist dabei so groß wie der gewünschte Toleranzausgleich.

**Fig. 9** zeigt das Montagesystem in der zweiten Maximalposition. Dabei liegt der Schnappriegel **35** am Anschlag **38** an, wodurch ein Weiterverschieben entgegen der ursprünglichen Fügebewegung **41** blockiert ist und demzufolge ein Aushängen des Halters **5** aus der Querschiene **2** nicht ohne Weiteres möglich ist. Zum Freigeben des Schnappriegels **35** ist ein besonderes Werkzeug erforderlich. Der Halter **5** wird in der Praxis gemäß **Fig. 8** an der Querschiene **2** anliegen oder aufgrund von Abstandstoleranzen sich zwischen den beiden Maximalpositionen gemäß **Fig. 8** und **Fig. 9** befinden. Wesentlich dabei ist, dass beim Ausgleich von Toleranzen die Überlappung bzw. der Schiebesitz zwischen der Vertiefung **27** und Vorsprung **29** stets bestehen bleibt, wodurch der Halter **5** bzw. das PV-Modul **1** selbst bei extremen Windverhältnissen nicht unerwünscht von der Stützfläche **19 a, b** abheben kann. Anhand der **Fig. 8** und **Fig. 9** ist außerdem erkennbar, dass die Auflagefläche **15 a, b** so bemessen ist, dass diese die Stützfläche **19 a, b** in statisch günstiger Weise über den gesamten Verschiebebereich überdeckt. Es versteht sich von selbst, dass benachbarten Halter und die diesen zugeordneten Querschienen einen korrespondierenden Abstand gemäß **Fig. 1** aufweisen.

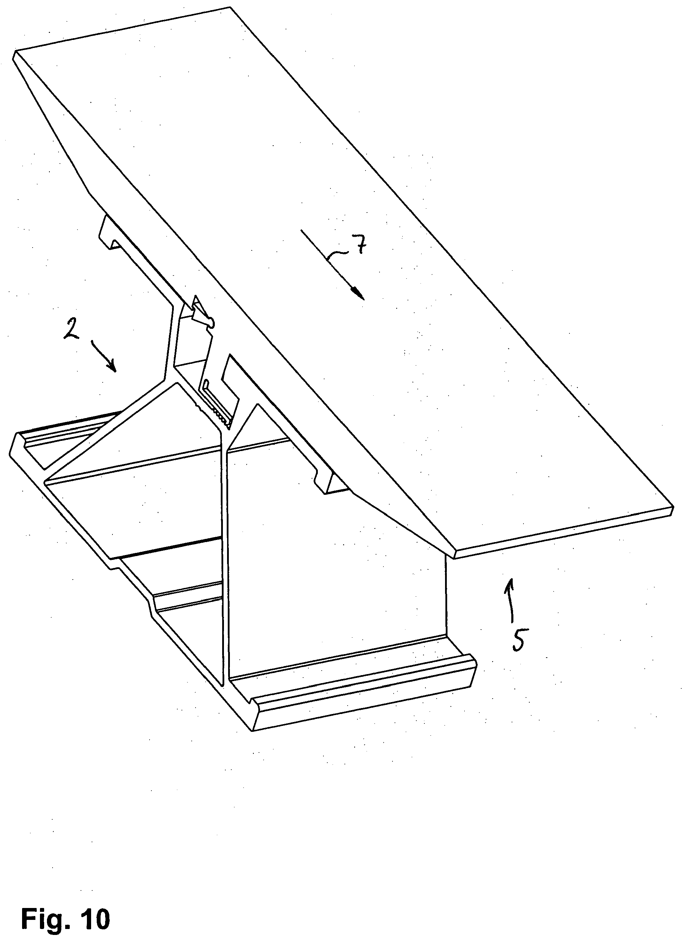

**Fig. 10** zeigt zur Veranschaulichung die Querschiene **2** und den Halter **5** des erfindungsgemäßen Montagesystems in der Maximalposition gemäß **Fig. 8** in einer perspektivischen Ansicht. Die Querschiene **2** ist hierbei lediglich im Bereich des Halters **5** dargestellt. Die vorstehenden Bezugszeichen gelten ergänzend.

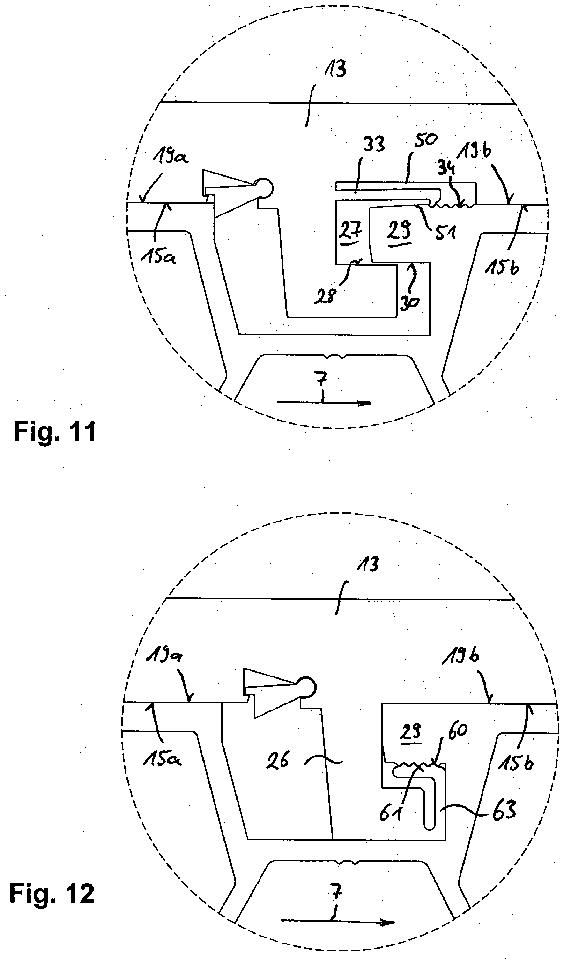

**Fig. 11** zeigt eine Variante zum Montagesystem gemäß **Fig. 1** bis **Fig. 10** hinsichtlich der Rastverbindung. Soweit nicht dargestellt gelten die Bezugszeichen entsprechend. Die dargestellte Position entspricht derjenigen gemäß **Fig. 9****.** Zu erkennen ist, dass die aus dem elastischen Schnapphaken **33** und der starren Zahnreihe **34** bestehende Rastverbindung nun in Höhe der Auflagefläche **15 b** bzw. der Stützfläche **19 b** angeordnet ist. Hierzu steht der Schnapphaken **33** am Fuß des starren Hakens **26** etwa senkrecht ab und ist einer Ausnehmung **50** im Tragkörper **13** aufgenommen, die zur Auflagefläche **15 b** offen ist. Die Zahnreihe **34** ist in der Stützfläche **19 a** der Querschiene **2** integriert. Der Schnapphaken **33** und die Zahnreihe **34** können in Richtung des Pfeils **7** wie in **Fig. 4** bis **Fig. 9** entsprechend beschrieben in mehreren aufeinanderfolgenden Fügepositionen im Rasteingriff stehen. Die Vertiefung **27** des Halters **5** ist gegenüber der Flanke **28** von dem Schnapphaken **33** begrenzt. Und der Vorsprung **29** der Querschiene ist gegenüber der Flanke **30** von einer Einlaufschräge **51** und nachfolgend von der Zahnreihe **34** begrenzt. Entsprechend greifen die Vertiefung **27** und der Vorsprung **29** nicht mehr formschlüssig, sonder kraft- und formschlüssig ineinander ein. Dennoch ist zwischen der Auflagefläche **15 a, b** sowie der schräg gegenüberliegenden Flanke **28** auf der Seite des Halters **5** und der Stützfläche **19 a, b** sowie der gegenüberliegenden Flanke **30** auf der Seite der Querschiene **2** im gewünschten Ausgleichsbereich für Abweichungen von Sollabständen ein Schiebesitz gegeben. Der Halter **5** und die Querschiene **2** sind an diesen Flächen beim Ineinanderschieben gegenseitig geführt. Der Vorteil dieser Variante liegt darin, dass der Schnapphaken **33** in der Ausnehmung **50** vor Beschädigung geschützt ist. Außerdem eignet sich die plane Kopffläche des Hakens **26** besser zum Stapeln und Verpacken, insbesondere falls die Halter **5** bereits werksseitig am PV-Modul **1** vormontiert sind.

**Fig. 12** zeigt eine weitere Variante zum Montagesystem gemäß **Fig. 1** bis **Fig. 10** hinsichtlich der Rastverbindung. Soweit nicht dargestellt gelten die Bezugszeichen entsprechend. Die dargestellte Position entspricht derjenigen gemäß **Fig. 8****.** Die Rastverbindung umfasst eine am Haken **26** elastisch angeordnete Zahnreihe **61** sowie eine am Vorsprung **29** starr angeordnete Zahnreihe **62.** Die Zahnreihen **61** und **62** können in mehreren Fügepositionen im Rasteingriff stehen, wobei die Fügepositionen wieder in Richtung des Pfeils **7** aufeinanderfolgen. Zur elastischen Anordnung der Zahnreihe **61** ist ein Biegebalken **63** vorgesehen, der am Hakenvorsprung des Hakens **26** angeordnet ist und die Zahnreihe **61** trägt. Die Zahnreihe **61** begrenzt hierbei zusammen mit der Auflagefläche **15 b** eine Vertiefung des Hakens **26,** die in der dargestellten Position von dem Vorsprung **29** ausgefüllt ist. Die Zahnreihe **61** stellt die untere Flanke dieser Vertiefung dar und liegt der Stützfläche **19 b** gegenüber. Der Vorsprung **29** wird an seiner unteren Flanke von der starren Zahnreihe **61** sowie dazu gegenüberliegend von der Stützfläche **19 b** begrenzt. Ein weiterer Unterschied dieser Variante besteht darin, dass der Halter **5** auch mit dem Kopf seines Hakens **26** am Boden der hinterschnittenen Längsnut **20** zur Anlage kommt. Dies kann zusätzlich statische Vorteile haben.

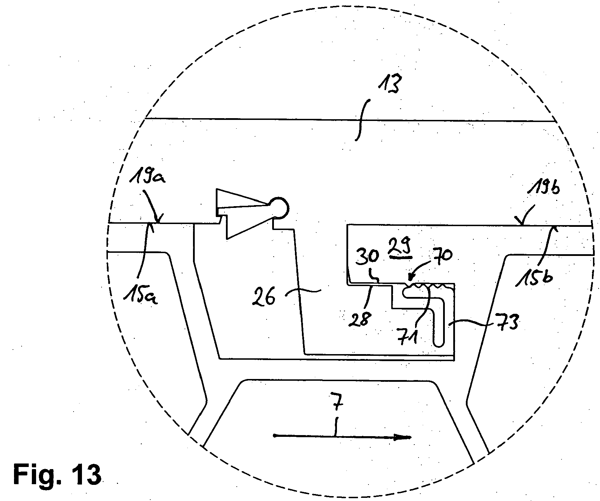

**Fig. 13** zeigt eine weitere Variante zum Montagesystem gemäß **Fig. 1** bis **Fig. 10** hinsichtlich der Rastverbindung. Soweit nicht dargestellt gelten die Bezugszeichen entsprechend. Die dargestellte Position entspricht derjenigen gemäß **Fig. 8****.** Die Rastverbindung umfasst eine Hakennase **70,** die von der unteren Flanke **30** des Vorsprungs **29** absteht. Als Gegenstück wirkt eine Zahnreihe **71,** die wie die Zahnreihe **60** gemäß **Fig. 12** mittels eines Biegebalkens **73** am Haken **26** elastisch angeordnet ist. Der wesentliche Unterschied zur Variante gemäß **Fig. 12** besteht darin, dass der Rastverbindung ein Schiebesitz zwischen den beiden Flanken **30** und **28** nachgeschaltet ist, so dass die Vertiefung des Hakens **26** und der Vorsprung **29** der Querschiene **2** zusätzlich wie gemäß **Fig. 4** bis **Fig. 9** passend ineinander schiebbar sind. Der Hakenvorsprung und die hinterschnittenen Längsnut **20** sind daher entsprechend breiter vorgesehen. Außerdem kann der Biegebalken 73 den Halter 5 gegen die Stützfläche 19 a, b spannen.

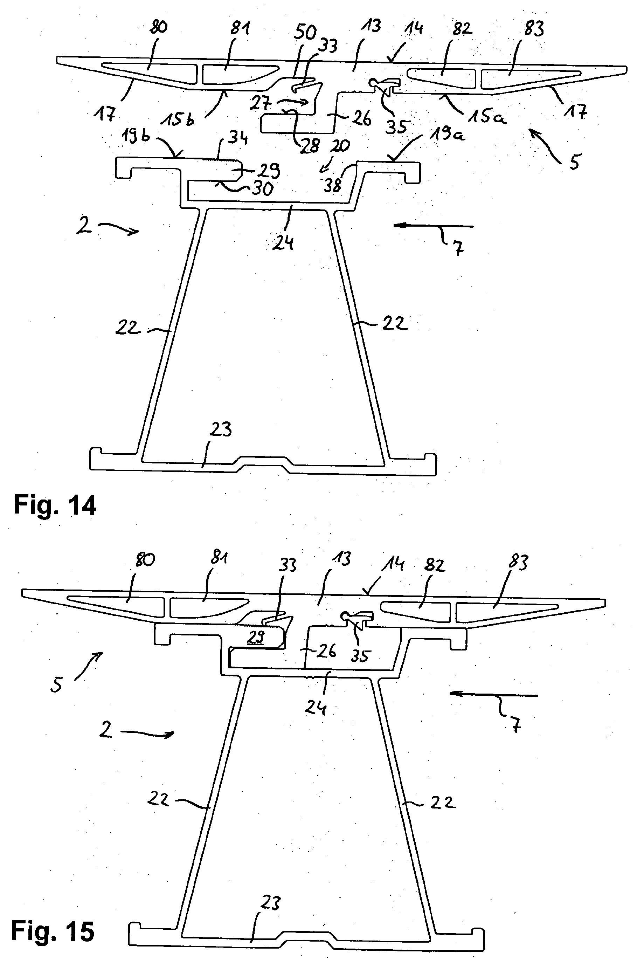

**Fig. 14** und **Fig. 15** zeigen die Querschiene **2** und einen Halter **5** eines weiteren Montagesystems vor dem Fügen und danach. Das Montagesystem ist vergleichbar zu der Variante gemäß **Fig. 11****,** so dass nur wesentliche Gemeinsamkeiten und Unterschiede erläutert werden und Bezugszeichen sinngemäß gelten. Der Tragkörper **13** des Halters **5** weist vier durchgehende Auslassungen **80, 81, 82** und **83** auf. Mittels der Auslassungen **80, 81, 82** und **83** kann der Halter **5** bzw. sein Tragkörper **13** leichter und materialsparender ausgeführt werden. Ähnlich wie bei dem Halter gemäß **Fig. 11** steht auch hier von der Auflagefläche **15 a, b** des Halter **5** ein Haken **26** ab. Der Halter **5** weist ebenso eine Vertiefung **27** auf, die als Hinterschnitt des Hakens **26** ausgeführt ist, wobei die obere Seite der Vertiefung **27** gegenüber der Flanke **28** in vergleichbarer Weise von einem Schnapphaken **33** gebildet wird. Der Schnapphaken **33** ist am Fußbereich des Hakens **26** angeformt und in diesem Ausführungsbeispiel in einem Winkel von rund 15° gegenüber der Auflagefläche **15 a, b** angestellt. Außerdem ist der Schnapphaken **33** wieder in einer Ausnehmung **50** im Tragkörper **13** aufgenommen, die zur Auflagefläche **15 b** offen ist. Die Querschiene **2** des Montagesystem gemäß **Fig. 14** und **Fig. 15** weist ähnlich wie die Querschiene gemäß **Fig. 4** einen trapezähnlichen Querschnitt auf, mit einem Obergurt **24** und einem dazu parallelen und breiteren Untergurt **23** sowie mit zwei schräg nach innen gerichteten Stegen **22.** Außerdem ist im oberen Bereich der Querschiene **2** zwischen ihrer Stützfläche **19 a, b** und dem Obergurt **24** wieder eine hinterschnittene Längsnut **20** vorgesehen mit einem hier vergleichsweise breiten Öffnungsschlitz. Der links vorgesehene Überstand der hinterschnittenen Längsnut **20** wirkt als Vorsprung **29** für die Vertiefung **27** des Hakens **26.** Der maximale Eingriff zwischen der Vertiefung **27** und dem Vorsprung **29** beträgt in diesem Ausführungsbeispiel mehr als einen Zentimeter, wobei zwischen der Auflagefläche **15 a, b** sowie der schräg gegenüberliegenden Flanke **28** auf der Seite des Halters **5,** und der Stützfläche **19 a, b** sowie der gegenüberliegenden Flanke **30** auf der Seite der Querschiene **2** im gewünschten Ausgleichsbereich für Abweichungen von Sollabständen ein Schiebesitz gegeben ist. Im Bereich des Vorsprung **29** ist außerdem ein Abschnitt der Stützfläche **19 b** als Zahnreihe **34** ausgeführt, welche mit dem Schnapphaken **33** zusammenwirkt und mit diesem eine Rastverbindung bildet mit mehreren Fügepositionen, die in Richtung des Pfeils 7 aufeinanderfolgen. Die Richtung des Pfeils **7** repräsentiert wiederum die Richtung der abwärtslaufenden Außenkanten der PV-Module **1** und/oder deren Hangabtriebsrichtung. Im Unterschied zur Ausführungsform gemäß **Fig. 5** ist die Zahnreihe **34** leicht schräg ausgeführt und wirkt auf diese Weise zugleich als Einlaufschräge für den Schnapphaken **33.** Anstelle der Verwendung eines separaten Federelements wie bei dem Halter gemäß **Fig. 5** besteht der Schnappriegel **35** in diesem Ausführungsbeispiel selbst aus elastischem Material, insbesondere aus EPDM-Gummi, wobei der Schnappriegel **35** so im Bereich seiner Ausnehmung gelagert ist, dass dieser unter elastischer Eigenverformung einlenkbar ist und entsprechend selbsttätig wieder auslenkt. Ferner ist der Halter **5** wie zuvor im Wesentlichen als Stranpressteil ausgeführt. Das bedeutet, dass dieser einschließlich der Auslassungen **80, 81, 82** und **83,** dem Haken **26** und dem Schnapphaken **33** nahezu ohne nachträgliche Bearbeitung durch Ablängen von einem entsprechend extrudierten Stranpressprofil herstellt werden kann. Lediglich der ebenfalls als Extrusionsteil ausgeführte Schnappriegel **35** ist separat herzustellen und die Ausnehmung **50** im Halter **5** einzuschieben.

## Patentansprüche

1. Montagesystem für Photovoltaik-Module, insbesondere für rahmenlose Dünnschichtmodule,
- mit zwei oder mehr profilförmigen Querschienen (**2**), die parallel beabstandet angeordnet und zum Halten mehrerer PV-Module vorgesehen sind, wobei jede der Querschienen (**2**) eine plane Stützfläche (**19 a, b**) aufweist, und
- mit mehreren Haltern (**5**), die jeweils unter Verwendung eines Klebemittels (**12**) mit der Rückseite (**11**) eines PV-Moduls (**1**) fest verbunden oder verbindbar sind,
- wobei das PV-Modul (**1**) mittels der Halter (**5**) an den Querschienen (**2**) einhängbar ist, wozu jeder Querschiene (**2**) mindestens ein Halter (**5**) zugeordnet ist und jeder Halter (**5**) eine Vertiefung (**27**) und jede Querschiene (**2**) einen integrierten Vorsprung (**29**) aufweist oder jeder Halter (**5**) einen Vorsprung und jede Querschiene eine integrierte Vertiefung aufweist,
- wobei das PV-Modul (**1**) zum Einhängen erstens auf die Querschienen (**2**) aufgelegt wird, so dass die Halter (**5**) auf den Stützflächen (**19 a, b**) der Querschienen (**2**) plan aufliegen, und zweitens dort aufliegend in einer Fügerichtung (**7, 41**) senkrecht zu den Querschienen (**2**) verschoben wird, wobei die Vertiefungen (**27**) und die Vorsprünge (**29**) ineinander eingreifen,
- und wobei zwischen mindestens einer Querschiene (**2**) und einem ihr zugeordneten Halter (**5**) eine Haltesicherung (**33, 34; 35, 38; 60, 61; 70, 71**) vorgesehen ist, die einer Verschiebung des Halters (**5**) gegen die Fügerichtung (**7, 41**) entgegenwirkt.

2. Montagesystem nach Anspruch 1, **dadurch gekennzeichnet, dass** die Halter (**5**) von der Außenkontur (**4**) des PV-Moduls (**1**) beabstandet an Stellen im Flächeninneren der Rückseite (**11**) des PV-Moduls (**1**) angeordnet sind.

3. Montagesystem nach Anspruch 1, **dadurch gekennzeichnet, dass** die Halter (**5**) jeweils einen flachen Tragkörper (**13**) aufweisen mit einer Auflagefläche (**15 a, b**) und einer dazu parallelen Klebefläche (**14**).

4. Montagesystem nach Anspruch 3, **dadurch gekennzeichnet, dass** sich die flachen Tragkörper (**13**) zu den Außenkanten ihrer Klebeflächen (**14**) verjüngen.

5. Montagesystem nach einem der Ansprüche 3 oder 4, **dadurch gekennzeichnet, dass** die flachen Tragkörper (**13**) jeweils einen trapezähnlichen Querschnitt aufweisen oder ähnlich einem Pyramidenstumpf oder einem Kegelstumpf geformt sind.

6. Montagesystem nach Anspruch 1, **dadurch gekennzeichnet, dass** die Stützflächen (**19 a, b**) der Querschienen (**2**) eine gemeinsame schräge Ebene bilden und die Fügerichtung (**7**) parallel zu dieser Ebene nach unten führt.

7. Montagesystem nach Anspruch 1, **dadurch gekennzeichnet, dass** die Vertiefung (**27**) eines Halters (**5**) oder einer Querschiene als Hinterschnitt eines Hakens (**26**) ausgeführt ist.

8. Montagesystem nach Anspruch 1, **dadurch gekennzeichnet, dass** der Vorsprung eines Halters oder einer Querschiene (**2**) als Überstand einer hinterschnittenen Nut (**20**) ausgeführt ist.

9. Montagesystem nach Anspruch 7, **dadurch gekennzeichnet, dass** der Haken (**26**) eines Halters (**5**) von dessen Auflagefläche (**15 a, b**) oder der Haken einer Querschiene von deren Stützfläche absteht.

10. Montagesystem nach Anspruch 8, **dadurch gekennzeichnet, dass** der Öffnungsschlitz der hinterschnittenen Nut eines Halters die Auflagefläche des Halters unterteilt oder dass der Öffnungsschlitz der hinterschnittenen Nut (**20**) einer Querschiene (**2**) die Stützfläche (**19 a, b**) der Querschiene (**2**) unterteilt.

11. Montagesystem nach einem der vorhergehenden Ansprüche, **dadurch gekennzeichnet, dass** zwischen der Auflagefläche (**15 a, b**) sowie einer parallel gegenüberliegenden Flanke (**28**) am Vorsprung oder der Vertiefung (**27**) des Halters (**5**) einerseits und der Stützfläche (**19 a, b**) sowie einer dazu parallel gegenüberliegenden Flanke (**30**) am Vorsprung (**29**) oder der Vertiefung der Querschiene (**2**) andererseits ein Schiebesitz (**15 b, 28; 19 b, 30**) vorgesehen ist.

12. Montagesystem nach Anspruch 1, **dadurch gekennzeichnet, dass** zur arretierenden Haltesicherung zwischen mindestens einer Querschiene (**2**) und einem ihr zugeordneten Halter (**5**) eine Rastverbindung (**33**, **34**) mit mehreren aufeinanderfolgenden Fügepositionen vorgesehen ist.

13. Montagesystem nach Anspruch 12, **dadurch gekennzeichnet, dass** die Rastverbindung (**33, 34**) eine in die Querschiene (**2**) integrierte Zahnreihe (**34**) und einen am Halter (**5**) elastisch angeordneten Schnapphaken (**33**) umfasst, der mit der Zahnreihe (**34**) zusammenwirkt.

14. Montagesystem nach Anspruch 12, **dadurch gekennzeichnet, dass** die Elemente der Rastverbindung (**33, 34, 60, 61, 70, 71**) an den Flanken des Vorsprungs (**29**) und/oder der Vertiefung (**27**) angeordnet sind und/oder so angeordnet sind, dass diese den Vorsprung (**29**) und/oder die Vertiefung (**27**) begrenzen.

15. Montagesystem nach Anspruch 1, **dadurch gekennzeichnet, dass** zur sperrenden Haltesicherung an mindestens einem der Halter (**5**) ein Sperrelement (**35**) vorgesehen ist, das in einer Freigabestellung ein Verschieben des Halters (**5**) auf der Stützfläche (**19 a, b**) der ihm zugeordneten Querschiene (**2**) in der Fügerichtung (**7**) zulässt und in einer Blockierstellung ein Verschieben entgegen der Fügerichtung (**7**) sperrt.

16. Montagesystem nach dem vorhergehenden Anspruch, **dadurch gekennzeichnet, dass** das Sperrelement ein am Halter (**5**) angeordneter Schnappriegel (**35**) ist, der mit einem Anschlag (**38**) an der Querschiene (**2**) zusammenwirkt.

17. Montagesystem nach dem vorhergehenden Anspruch, **dadurch gekennzeichnet, dass** der Schnappriegel (**35**) in der Freigabestellung in einer in der Auflagefläche (**15 a**) des Halters (**5**) vorgesehenen Ausnehmung (**36**) eingelenkt ist und in der Blockierstellung an dem Anschlag (**38**) der Querschiene (**2**) anstehen kann.

18. Montagesystem nach Anspruch 1, **dadurch gekennzeichnet, dass** genau zwei Querschienen (**2**) und je Querschiene (**2**) genau ein, zwei oder drei mit der Rückseite des PV-Moduls (**1**) fest verbundene Halter (**5**) vorgesehen sind.

19. Montagesystem nach Anspruch 1, **dadurch gekennzeichnet, dass** die Querschiene (**2**) einen trapezartigen Hohlquerschnitt mit zwei schrägen Stegen (**22**) aufweist.

20. Montagesystem nach dem vorhergehenden Anspruch, **dadurch gekennzeichnet, dass** die schrägen Stege (**22**) sich in ihrer Verlängerung in einer Schnittlinie (**25**) in oder nahe der Stützfläche (**19 a, b**) schneiden und, dass sich die Stützfläche (**19 a, b**) beidseits der Schnittlinie (**25**) erstreckt.

21. Montagesystem nach einem der vorhergehenden Ansprüche, **dadurch gekennzeichnet, dass** die Halter (**5**) im Wesentlichen als Strangpressteile ausgeführt sind.

22. Montagesystem nach einem der vorhergehenden Ansprüche, **dadurch gekennzeichnet, dass** die Fügerichtung (**7**, **41**) zur Hangabtriebsrichtung der PV-Module (**1**) und/oder zu deren abwärtslaufenden Außenkanten gleichgerichtet ist.

23. Halter (**5**) für ein Montagesystem nach einem derAnsprüche 1 bis 22, **dadurch gekennzeichnet, dass** der Halter (**5**) zum Einhängen eine Vertiefung (**27**) oder einen Vorsprung (**29**) aufweist und Mittel (**33, 35, 61, 71**) einer Haltesicherung vorgesehen sind, und der Halter (**5**) einen flachen Tragkörper (**13**) aufweist mit einer Auflagefläche (**15 a, b**) und einer dazu parallelen Klebefläche (**14**), wobei sich der flache Tragkörper (**13**) zu den Außenkanten der Klebefläche (**14**) verjüngt.

24. Querschiene (**2**) für ein Montagesystem nach Anspruch 12, **dadurch gekennzeichnet, dass** die Querschiene (**2**) eine Stützfläche (**19 a, b**) und einen Vorsprung (**29**) aufweist, und eine in die Querschiene (**2**) integrierte Zahnreihe (**34**) einer Rastverbindung vorgesehen ist, wobei die Zahnreihe (**34**) in Höhe der Stützfläche (**19 b**) an den Flanken des Vorsprungs (**29**) angeordnet ist.

25. Baugruppe bestehend aus dem PV-Modul (**1**) und den daran rückseitig aufgeklebten Haltern (**5**) des Montagesystem nach einem der Ansprüche 1 bis 22.

## Claims

1. A mounting system for photovoltaic modules, in particular for frameless thin-film moduls,
- having two or more profile-shaped cross rails (2) which are arranged parallel to and at a distance to each other and which are provided to hold several PV modules, wherein each of the cross rails (2) comprises a plane supporting surface (19 a, b), and
- comprising several holders (5) which are each fixed or fixable to the back side (11) of a PV module (1) by using an adhesive agent (12),
- wherein the PV module (1) can be mounted to the cross rails (2) by means of the holders (5), for which purpose each cross rail (2) has at least one holder (5) associated therewith and either each holder (5) has a recess (27) and each cross rail (2) has an integrated protrusion (29) or each holder (5) has a protrusion and each cross rail (2) has an integrated recess,
- wherein, for mounting, the PV module (1) is first placed on the cross rails (2) so that the holders (5) lay flat on the supporting surfaces (19 a, b) of cross rails (2), and secondly, while laying thereon, are shifted in a joining direction (7, 41) perpendicular to the cross rails (2), wherein the recesses (27) and the protrusions (29) engage with each other, and wherein
- a retaining safety device (33, 34, 35, 38, 60, 61, 70, 71) is provided between at least one cross rail (2) and a holder (5) associated therewith, said retaining safety device (33, 34; 35, 38; 60, 61; 70, 71) counteracting a shift of the holder (5) against the joining direction (7, 41).

2. The mounting system according to claim 1, characterized that the holders (5) are arranged at a distance from the outer contour (4) of the PV module (1) at positions within the inner surface area of the backside (11) of the PV module (1).

3. The mounting system according to claim 1, characterized that the holders (5) each comprise a flat supporting body (13) having a contact surface (15 a, b) and an adhesion surface (14) parallel thereto.

4. The mounting system according to claim 3, characterized that the flat supporting bodies (13) narrow towards the outer edges of their adhesion surfaces (14).

5. The mounting system according to any one of claims 3 or 4, characterized that the flat supporting bodies (13) each have a trapezoid-like cross section or are formed similar to a truncated pyramid or a truncated cone.

6. The mounting system according to claim 1, characterized that the supporting surfaces (19 a, b) of the cross rails (2) build a common inclined plane and the joining direction (7) running downwards parallel to the said plane.

7. The mounting system according to claim 1, characterized that the recess (27) of a holder (5) or the recess of a cross rail is designed as an indentation of a hook (26).

8. The mounting system according to claim 1, characterized that the protrusion of a holder or of a cross rail (2) is designed as an overhang of an undercut groove (20).

9. The mounting system according to claim 7, characterized that the hook (26) of a holder (5) sticks out from the holder's contact surface (15 a, b), or the hook of the cross rail sticks out from the cross rail's supporting surface.

10. The mounting system according to claim 8, characterized that the opening slot of the undercut groove of a holder divides the contact surface of said holder, or the opening slot of the undercut groove (20) of a cross rail (2) divides the contact surface (19 a, b) of said cross rail (2).

11. The mounting system according to any one of the preceding claims, characterized that a sliding fit (15 b, 28; 19b, 30) is further comprised, the sliding fit (15 b, 28; 19b, 30) is arranged between the contact surface (15 a, b) and an opposite flank (28) arranged parallel thereto at the protrusion or at the recess (27) of the holder (5), on the one hand, and the plane supporting surface (19 a, b) and an opposite flank (30) arranged parallel thereto at the protrusion (29) or at the recess of the cross rail (2), on the other hand.

12. The mounting system according to claim 1, characterized that in addition to the snap-fit connection between at least one cross rail (2) and its holder (5) related thereto a row (33, 34) of teeth is provided having several successive joining positions.

13. The mounting system according to claim 12, characterized that the snap-fit connection (33, 34) comprises a row (34) of teeth integrated into the cross rail (2) and a snap-fit hook (33) elastically arranged at the holder (5), wherein the snap-fit hook (33) is interacting with the row (34) of teeth.

14. The mounting system according to claim 12, characterized that the elements (33, 34, 60, 61, 70, 71) of the snap-fit connection are arranged at flanks of the protrusion (29) and/or of the recess (27), and/or are arranged such that they limit the protrusion (29) and/or the recess (27).

15. The mounting system according to claim 1, characterized that for retaining safety in a blocking manner further comprises a blocking element (35) disposed at at least one of the holders (5), wherein the blocking element (35), in a release position, allows a shift of the holder (5) on the supporting surface (19 a, b) of the cross rail (2) associated therewith into the joining direction (7), and, in a blocking position, blocks a shift against the joining direction (7).

16. The mounting system according to the preceding claim, characterized that the blocking element (35) is a latch (35) arranged at the holder (5), the latch (35) is interacting with a limit stop (38) at the cross rail (2).

17. The mounting system according to the preceding claim, characterized that the latch (35), in the release position, is turned into a recess (36) arranged within the contact surface (15a) of the holder (5) and, in the blocking position, can abut against the limit stop (38) of the cross rail (2).

18. The mounting system according to claim 1, characterized that exactly two cross rails (2) are provided and, per cross rail (2) one, two or three holders (5) are provided which are fixed to the back side of the PV module (1).

19. The mounting system according to claim 1, characterized that the cross rail (2) comprises a trapezoid-like hollow section with two slant bars (22).

20. The mounting system according to any one of the preceding claims, characterized that the slant bars (22) intersect in their extension in an intersection line (25) in or close to the supporting surface (19 a, b) and that the supporting surface (19 a, b) extends on both sides of the intersection line (25).

21. The mounting system according to any one of the preceding claims, characterized that the holders (5) are designed substantially as extrusion molded parts.

22. The mounting system according to any one of the preceding claims, characterized that the joining direction (7, 41) is aligned into the direction of the downhill force of the PV modules (1) and/or to the outer edges of the PV modules (1) running downwards.

23. A holder (5) for a mounting system according to one of the claims 1 to 22, characterized that the holder (5) shows a protrusion (29) or a recess (27) for mounting and elements (33, 35, 61, 71) of a snap-fit connection are provided and the holder (5) comprises a flat supporting body (13) having a contact surface (15 a, b) and an adhesion surface (14) parallel thereto, wherein the flat supporting body (13) narrows towards the outer edges of the adhesion surface (14).

24. A cross rail (2) for a mounting system according to claim 12, characterized that the cross rail (2) comprises a supporting surface (19 a, b) and a protrusion (29) and a row of teeth (34) of a snap-fit connection integrated into the cross rail (2), wherein the row of teeth (34) is arranged at the flanks of the protrusion in height of the support surface (19 b).

25. An assembly group consisting of the PV module (1) and the holders (5) of the mounting system according to any one of the claims 1 to 22, wherein the holders (5) are adhesively affixed to the back side of the PV module (1).

## Revendications

1. Système de montage pour modules photovoltaïques, plus particulièrement pour modules à couche mince sans cadre, comprenant
- deux ou plusieurs barres transversales profilées (2), qui sont disposées parallèlement à distance les unes des autres et destinées à soutenir plusieurs modules photovoltaïques, chacune des barres transversales (2) présentant une surface d'appui plane (19 a, b), et
- plusieurs supports (5), qui sont ou peuvent chacun être reliés de manière fixe à l'aide de colle (12) à la face arrière (11) d'un module photovoltaïque (1),
- le module photovoltaïque (1) pouvant être accroché aux barres transversales (2) au moyen desdits supports (5), au moins un support (5) étant pour ce faire associé à chacune des barres transversales (2), et chaque support (5) présentant un évidement (27), et chaque barre transversale (2) une saillie (29) intégrée, ou chaque support (5) une saillie, et chaque barre transversale un évidement intégré,
- le module photovoltaïque (1) à accrocher étant tout d'abord posé sur les barres transversales (2) de sorte que les supports (5) reposent à plat sur les surfaces d'appui (19 a, b) des barres transversales (2), et étant, tout en restant posé, ensuite déplacé perpendiculairement aux barres transversales (2) en le faisant glisser dans un sens d'assemblage (7, 41), les évidements (27) et les saillies (29) entrant ainsi mutuellement en prise,
- et un élément d'arrêt (33, 34; 35, 38; 60, 61; 70, 71) étant prévu entre au moins une barre transversale (2) et un support (5) lui correspondant, pour empêcher le déplacement du support (5) à l'encontre du sens d'assemblage (7, 41).

2. Système de montage selon la revendication 1, **caractérisé en ce que** les supports (5) sont disposés à distance du contour extérieur (4) du module photovoltaïque (1), à des endroits situés à l'intérieur de la surface de la face arrière (11) du module photovoltaïque (1).

3. Système de montage selon la revendication 1, **caractérisé en ce que** les supports (5) présentent chacun un corps de support (13) plat pourvu d'une surface d'appui (15 a, b) et d'une surface adhésive (14) parallèle à cette dernière.

4. Système de montage selon la revendication 3, **caractérisé en ce que** les corps de support (13) plats s'effilent en direction des bords extérieurs de leur surface adhésive (14).

5. Système de montage selon l'une des revendications 3 ou 4, **caractérisé en ce que** les corps de support (13) plats présentent chacun une section transversale semblable à un trapèze ou qu'ils sont réalisés semblables à une pyramide tronquée ou à un cône tronqué.

6. Système de montage selon la revendication 1, **caractérisé en ce que** les surfaces d'appui (19 a, b) des barres transversales (2) forment un plan oblique commun et que le sens d'assemblage (7) va vers le bas parallèlement à ce plan.

7. Système de montage selon la revendication 1, **caractérisé en ce que** l'évidement (27) d'un support (5) ou d'une barre transversale est réalisé sous la forme d'une contre-dépouille d'un crochet (26).

8. Système de montage selon la revendication 1, **caractérisé en ce que** la saillie d'un support ou d'une barre transversale (2) est réalisée sous la forme d'un débordement de la rainure en contre-dépouille (20).

9. Système de montage selon la revendication 7, **caractérisé en ce que** le crochet (26) d'un support (5) est éloigné de la surface d'appui (15 a, b) de ce dernier, ou **en ce que** le crochet d'une barre transversale est éloigné de la surface d'appui de cette dernière.

10. Système de montage selon la revendication 8, **caractérisé en ce que** la fente d'ouverture de la rainure en contre-dépouille d'un support divise la surface d'appui du support ou que la fente d'ouverture de la rainure en contre-dépouille (20) d'une barre transversale (2) divise la surface d'appui (19 a, b) de la barre transversale (2).

11. Système de montage selon l'une des revendications précédentes, **caractérisé en ce qu'**il est prévu un siège coulissant (15 b, 28; 19 b, 30) d'une part entre la surface d'appui (15 a, b) et un flanc (28) agencé parallèlement en face de celle-ci sur la saillie ou l'évidement (27) du support (5), et d'autre part, entre la surface d'appui (19 a, b) et un flanc (30) agencé parallèlement en face de celle-ci sur la saillie (29) ou l'évidement de la barre transversale (2).

12. Système de montage selon la revendication 1, **caractérisé en ce qu'**une liaison par encliquetage (33, 34) pourvue de plusieurs positions d'assemblage successives est prévue entre au moins une barre transversale (2) et un support (5) lui correspondant, pour assurer le blocage de l'élément d'arrêt.

13. Système de montage selon la revendication 12, **caractérisé en ce que** la liaison par encliquetage (33, 34) comprend une rangée de dents (34) intégrée dans la barre transversale (2) et un cliquet (33) disposé de manière élastique sur le support (5), lequel cliquet coopère avec ladite rangée de dents (34).

14. Système de montage selon la revendication 12, **caractérisé en ce que** les éléments de la liaison par encliquetage (33, 34) sont disposés sur les flancs de la saillie (29) et/ou de l'évidement (27) et/ou disposés de telle sorte qu'ils délimitent la saillie (29) et/ou l'évidement (27).

15. Système de montage selon la revendication 1, **caractérisé en ce qu'**un élément de blocage (35) est prévu sur au moins un des supports (5) pour bloquer l'élément d'arrêt, lequel élément de blocage autorise, dans une position libérée, un déplacement du support (5) sur la surface d'appui (19 a, b) et empêche, dans une position bloquée, un déplacement à l'encontre du sens d'assemblage (7).

16. Système de montage selon la revendication précédente, **caractérisé en ce que** l'élément de blocage est constitué par un verrou d'encliquetage (35) disposé sur le support (5), lequel verrou coopère avec une butée (38) agencée sur la barre transversale (2).

17. Système de montage selon la revendication précédente, **caractérisé en ce que** ledit verrou d'encliquetage (35) est, dans la position libérée, logé dans une réservation ménagée dans la surface d'appui (15 a) du support (5) et peut, dans la position bloquée, être en butée avec la butée (38) de la barre transversale (2).

18. Système de montage selon la revendication 1, **caractérisé en ce qu'**il est prévu exactement deux barres transversales (2) et, par barre transversale (2), exactement un, deux ou trois supports (5) reliés de manière fixe à la face arrière du module photovoltaïque (1).

19. Système de montage selon la revendication 1, **caractérisé en ce que** la barre transversale (2) se présente sous la forme d'un profilé trapézoïdal creux pourvu de deux branches (22) obliques.

20. Système de montage selon la revendication précédente, **caractérisé en ce que** lesdites branches (22) obliques se coupent dans leur prolongement suivant une ligne de coupe (25) dans ou près de la surface d'appui (19 a, b), et **en ce que** la surface d'appui (19 a, b) s'étend de part et d'autre de ladite ligne de coupe (25).

21. Système de montage selon l'une des revendications précédentes, **caractérisé en ce que** les supports (5) sont réalisés pour l'essentiel sous forme de pièces extrudées.

22. Système de montage selon l'une des revendications précédentes, **caractérisé en ce que** le sens de déplacement (7, 41) est orienté vers la direction descensionnelle des modules photovoltaïques (1) et/ou vers les bords extérieurs descendants de ces derniers.

23. Support (5) pour un système de montage selon l'une des revendications 1 à 22, **caractérisé en ce que** le support (5) présente pour son accrochage un évidement (27) ou une saillie (29) et qu'il est prévu des moyens d'arrêt (33, 35, 61, 71), et que le support (5) présente un corps de support (13) plat pourvu d'une surface d'appui (15 a, b) et une surface adhésive (14) parallèle à cette dernière, le corps de support (13) plat allant en se rétrécissant vers les bords extérieurs de la surface adhésive (14).

24. Barre transversale (2) pour un système de montage selon la revendication 12, **caractérisée en ce que** la barre transversale (2) présente une surface d'appui (19 a, b) et une saillie (29), et **en ce qu'**il est prévu une rangée de dents (34) pour liaison par encliquetage, laquelle rangée est intégrée dans la barre transversale (2), cette rangée de dents (34) étant disposée à hauteur de la surface d'appui (19 b) sur les flancs de la saillie (29).

25. Assemblage constitué par un module photovoltaïque (1) et, collés au dos de celui-ci, des supports (5) du système de montage selon l'une des revendications 1 à 22.
